# EUROPEAN PATENT APPLICATION

(11) **EP 3 326 738 A1**
(43) Date of publication of application: **30.05.2018**
(21) Application number: 17020012.5
(22) Date of filing: 09.01.2017
(51) Int. Cl.: B22F 3/105, B23K 26/36, B29C 67/00, B33Y 10/00, B33Y 30/00, B33Y 50/02

(54) **LASER DEPOSITION AND ABLATION FOR ADDITIVE AND ABLATION MANUFACTURING**

(30) Priority: 29.11.2016 US 201615362927
(71) Applicant: Linde Aktiengesellschaft, 80331 München (DE)
(72) Inventor: GRZEGORZ, Moroz, Pittstown, New Jersey 08867 (US); AKIN, Malas, New Providence, New Jersey 07974 (US); NEERAJ, Saxena, Murray Hill, New Jersey 07974 (US)
(74) Representative: Gellner, Bernd

(57) **Abstract**

An apparatus for manufacturing an object includes a first assembly including a laser for laser-based additive manufacturing of a powder material for forming the object, and a second assembly coacting with the first assembly for cooling at least a portion of said object during said additive manufacturing. An apparatus for manufacturing an object may also include a first assembly including a laser for laser-based ablation of a material structure for forming the object, and a second assembly coacting with the first assembly for cooling at least a portion of said material structure during said ablation manufacturing. Related methods are also provided.

## Description

The present embodiments relate to an apparatus and a method for manufacturing an object layer by layer.

In known processes and with known apparatus, a three dimensional (3-D) object can be produced from a laser sintering process, wherein a metal powder is introduced around a substrate (ie, a fabrication piston) in the presence of a rastering laser in an enclosed environment to provide selective metal heating and sintering of the metal powder into a 3-D pattern resulting in the desired object to be created. Manufacture of such products is known as 3-D printing or additive manufacturing.

Other known processes and apparatus use a laser to remove a portion from an object, such that a resulting part or component is produced from the object.

Unfortunately, it is difficult to control the heating and/or cooling of the 3-D object, or part, that is formed or printed, especially during the different phases that occur during the object's creation. For example, it is necessary during additive manufacturing of the object that selective melting occurs for a top layer of metal for the object, while insuring that there is also no deformation of an underlying solidified layer of the object due to secondary heat accumulation. Such preventive measures can be a challenge when forming 3-D parts with known apparatus and processes.

To obviate difficulties that may occur with known apparatus and processes, active substrate cooling and adjustment of the speed of the laser rastering is used to reach an acceptable balance between a speed of the 3-D or laser sintering, and the heat management to limit a rate at which the object is printed.

In general, there is provided aligning an injection dosing system with a laser rastering mechanism, such that liquid gas is sprayed near a vicinity of a region or spot on material where the laser is creating a 3-D object. The laser may be fabricating the part by sintering metal powder during additive manufacturing or cutting away of metal (also known as ablating the metal) to reveal a desired part or object. The laser provides controlled heat, while a liquefied gas provides a locally available cooling medium, such as for example a cryogen. By adjusting the power to the laser and the flow rate of the liquefied cooling gas, a balance of heating and cooling is created between melting of additional metal and its subsequent cooling during creation of the 3-D object.

There is therefore provided an apparatus embodiment for manufacturing an object, comprising a first assembly including a laser for laser-based additive manufacturing of a powder material for forming the object, and a second assembly coacting with the first assembly for cooling at least a portion of said object during said additive manufacturing.

Another embodiment herein includes a method of manufacturing an object, comprising applying laser - based additive manufacturing for heating an amount of powder material, and cooling said powder material layer-by-layer during the applying said additive manufacturing.

Still another embodiment herein includes an apparatus for manufacturing an object, comprising a first assembly including a laser for laser-based ablation manufacturing of a material structure for forming the object, and a second assembly coacting with the first assembly for cooling at least a portion of said material structure during said ablation manufacturing.

A further embodiment herein includes a method of manufacturing an object, comprising applying laser - based ablation manufacturing for heating a material structure and removing an amount of material from said material structure, and cooling said material structure where said amount was removed during the ablation manufacturing.

For a more complete understanding of the present invention, reference may be had to the following description of exemplary embodiments considered in connection with the accompanying drawing Figures, of which:
FIG. 1 shows an apparatus embodiment of the present invention for use with a three dimensional (3-D) or additive manufacturing laser sintering process; and
FIG. 2 shows another embodiment of the apparatus for use during ablation-type of manufacturing.

Before explaining the inventive embodiments in detail, it is to be understood that the invention is not limited in its application to the details of construction and arrangement of parts illustrated in the accompanying drawings, if any, since the invention is capable of other embodiments and being practiced or carried out in various ways. Also, it is to be understood that the phraseology or terminology employed herein is for the purpose of description and not of limitation.

In the following description, terms such as a horizontal, upright, vertical, above, below, beneath and the like, are to be used solely for the purpose of clarity illustrating the invention and should not be taken as words of limitation. The drawings are for the purpose of illustrating the invention and are not intended to be to scale.

For purposes of the description herein, "ablation" refers to the removal of a portion of an object comprised of a particular substance, such that removal of the portion results in a part, component or object having a select size and shape.

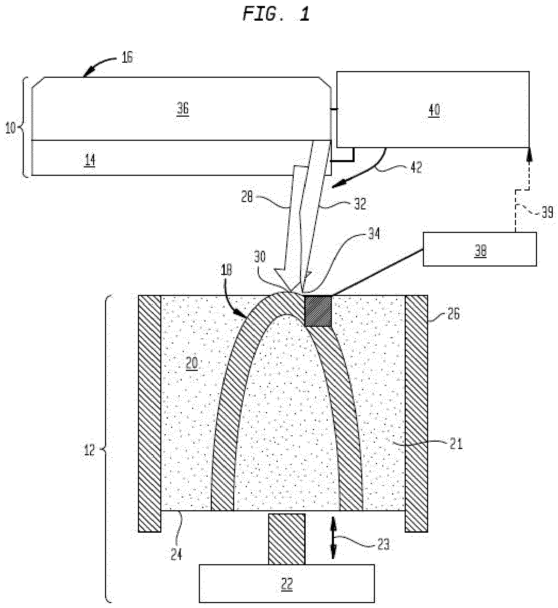

Referring to FIG. 1, there is shown an additive manufacturing apparatus (AMA) embodiment generally at 10 used during additive manufacturing with a delivery and fabrication system (DFS) shown generally at 12. The AMA includes a laser 14 and a dosing apparatus 16 which coact during additive manufacturing of a part 18, object or component.

The powder material from which the part 18 is manufactured originates in the DFS 12, and such systems are known in the industry. The DFS 12 includes a powder 20 which is shown as disposed as a bed 21 of powder that is transported by for example a fabrication piston 22 having a platform 24 upon which the powder bed 21 is supported and moved for the additive manufacturing. The DFS 12 also includes a container 26 for the powder 20 so that in effect the container and the platform 24 coact to contain the powder bed 21 for the additive manufacturing.

The laser 14 provides a beam 28 to impact a region 30 or region on the powder 20 to heat and thereby sinter same. The region can range in size with a diameter of from between 10 microns to 5 mm. The dosing apparatus 16 coacts with the laser 14 to cool the powder 20 being heated. That is, the dosing apparatus 16 includes a pipette 32 or capillary tube in fluid communication with a source 36 of cryogen selected from the group consisting of liquid argon, liquid carbon dioxide or liquid nitrogen (LIN). The pipette 32 has an opening 34 positioned in close proximity to where the region 30 of the powder 20 is contacted for being heated by the laser beam 28. The cryogen 36 is delivered through the pipette 32 and out of the opening 34 onto the region 30 to immediately cool and thereby solidify the heated (such as sintered) powder 20. The powder 20 may consist of metals selected from the group consisting of for example high alloy steels, stainless steel, titanium and titanium alloys, nickel and nickel alloys, copper and copper alloys, cobalt alloys, binary alloys and super alloys. The powder 20 may instead consist of a plastic or polymer selected from the group consisting of for example photopolymer resin; thermoplastic, thermopolymer material such as, acrylonitile butadiene styrene (ABS), polylactic acid (PLA), polyvinyl alcohol (PVN), polycarbonate; and carbon fiber.

The delivery of the cryogenic substance 36 through the opening 34 is aligned with movement or rastering of the laser beam 28, such that cooling with the cryogenic substance at the region 30 can selectively be operated to (i) cool the region prior to the laser beam 28 contacting the region, (ii) cool the region concurrent with the beam 28 contacting the region, or (iii) cool the region immediately after the beam has contacted the region. Such determination as to when the cryogenic substance cools the metal powder being sintered will depend upon the composition of the part, the type of powder 20 to be used for additive manufacturing, and the speed at which the rastering is occurring with the laser beam 28.

The fabrication piston 22 is movable as represented by arrow 23. As the fabrication piston 22 elevates the platform 24 to bring successive layers of the powder 20 into position for exposure to the laser beam 28 and the cryogenic substance 36, a temperature sensor 38 may be used to transmit a signal 39 to a controller 40 identifying the heating by the laser beam 28 and the cooling by the cryogenic substance 36, which coacts with the laser 14 and the dosing apparatus 16 as also represented by arrow 42 to adjust the additive manufacturing of the part 18. The signal may be transmitted wirelessly or by any known transmission system.

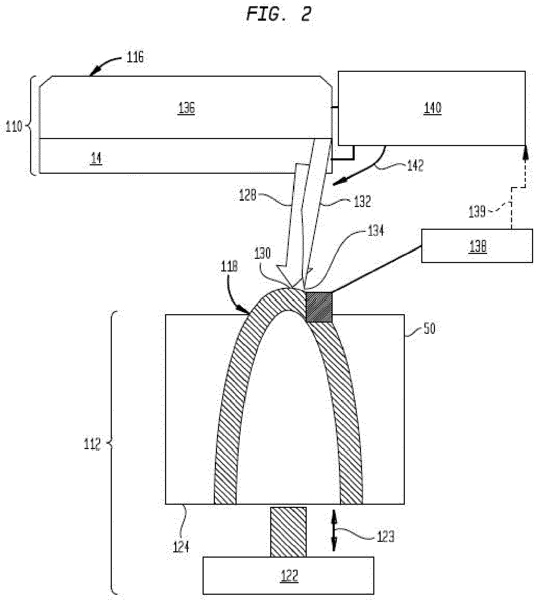

Another exemplary embodiment of a laser-based ablation manufacturing process in accordance with the present invention is illustrated in FIG. 2. Elements illustrated in FIG. 2 which correspond to the elements described above with respect to FIG. 1 have been designated by corresponding reference numerals increased by one-hundred (100). The embodiment of FIG. 2 is designed for use in the same manner as the embodiment in FIG. 1, unless otherwise stated.

Referring now to FIG. 2, the AMA 110 can similarly be used where a part 118 is being produced from a solid metal or plastic structure being cut away, or ablated, to create said part.

That is, instead of the pipette 21 delivering the cryogen substance 136 to cool the powder 20, there is provided a metal structure 50 such as for example a block of solid metal to which the laser beam 128 is applied and rastered to remove or ablate that portion of the block so that only the part 118 desired remains. Similarly, the cryogenic substance 136 is provided through the pipette 132 out of the opening 134 thereof to cool the region 130 or spot where the laser beam is cutting away the block 50. Similar to the embodiment above in FIG. 1, delivery of the cryogenic substance 136 can be aligned with the rastering of the laser beam 128 such that the cryogenic substance is provided to the region 130 (i) before the laser beam 128 contacts the region, (ii) concurrent with the laser beam contacting this region, or (iii) immediately after the laser beam contacts the region. The cryogenic substance 136 cools the region 130 so that the melt from the block 50 does not run-off and add imperfections or unnecessary surface relief to the resulting part 118.

The apparatus and method embodiments of FIGS. 1 and 2 provide other features for the lased-based additive manufacturing an laser-based ablation manufacturing.

Certain embodiments above include an apparatus, wherein the laser comprises a laser rastering apparatus aligned with the second assembly for the cooling during either of said additive or ablation manufacturing.

Certain embodiments above include an apparatus, wherein the second assembly comprises a scanner apparatus constructed and arranged to scan for an impact region on the powder material for the laser emitted from the first assembly.

Certain embodiments above include an apparatus, wherein the second assembly comprises a tube having a passageway therethrough; and a liquefied gas for being provided through the passageway to said object during either of said additive or ablation manufacturing.

Certain embodiments above include an apparatus, wherein said liquefied gas is a cryogen selected from the group consisting of liquid CO₂, liquid nitrogen, and liquid argon.

Certain embodiments above include an apparatus, wherein the passageway of the tube has an opening with a diameter in a range of from 10 microns to one millimeter through which the liquefied gas is delivered.

Certain embodiments above include an apparatus, wherein the opening is within 10 mm from a region of the powder material at which the laser impacts.

Certain embodiments above include an apparatus, wherein the first and second assemblies are constructed as an integral unit.

Certain embodiments above include an apparatus, wherein the first and second assemblies are movable in conjunction with each other.

Certain embodiments also include a method, wherein said cooling comprises providing a liquefied gas to the amount of powder material during the heating.

Certain embodiments above include a method, wherein the liquefied gas is a cryogen selected from the group consisting of liquid CO₂, liquid nitrogen, and liquid argon.

Certain embodiments above include a method, wherein the cooling is provided to said amount of powder material concurrent with the applying said additive manufacturing.

Certain embodiments above include a method, wherein the cooling is provided to said amount of powder material after the applying said additive manufacturing.

Certain embodiments above include a method, wherein the cooling is provided to said amount of powder material before the applying said additive manufacturing.

Certain embodiments above include a method, wherein the object is selected from the group consisting of a part and a component.

Certain embodiments above include a method, wherein the powder material is selected from the group consisting of high alloy steels, stainless steel, titanium and titanium alloys, nickel and nickel alloys, copper and copper alloys, cobalt alloys, binary alloys, and super alloys, plastics, polymers, photopolymer resin; thermoplastic, thermopolymer material such as, acrylonitile butadiene styrene (ABS), polylactic acid (PLA), polyvinyl alcohol (PVN), polycarbonate; and carbon fiber.

The inventive method includes additive manufacturing methods like selective laser melting (SLM), selective heat sintering (SHS), selective laser sintering (SLS), and direct metal laser sintering (DMLS).

In selective laser sintering (SLS) a high power laser fuses a powder of metal (or ceramics or glass) into a mass that has a desired three-dimensional shape. In this case the laser selectively fuses powdered material by scanning cross-sections generated from a description of the part on the surface of a powder bed. After each cross-section is scanned, the powder bed is lowered by one layer thickness, a new layer of powder material is applied on top and the process is repeated until the part is completed. As the density of the finished part depends on the power of the laser and not the laser duration normally pulsed lasers are used. With selective laser sintering parts can be produced from a variety of metals including steel alloys, titanium, and alloy mixtures. In the method the physical process can be a full melting, a partial melting or a liquid phase sintering.

Direct metal laser sintering (DMLS) uses a laser which is directed to a bed of powdered metal wherein the material is melted or welded together to create the solid structure. A device for direct metal laser sintering uses a laser wherein a built chamber area uses a material dispensing platform and a built platform along with a recoater plate is used to move new powder over the built platform. This technology fuses metal powder into a solid part by melting and locally using the focus laser beam. Parts are built-up and additively layer-by-layer typical using layers which are for example about 20 µm thick. The used material could be stainless steel, tool steel, cobalt chromium, inconel, aluminum and titanium.

Another additive manufacturing method is the so-called Additive Laser Deposition. A powder material is introduced into a melt bath generated by a laser. The powder material is fed close to the laser beam through a nozzle or one or more apertures by means of a carrier gas. It is further possible to feed an additional process gas to the melt bath via a second nozzle.

By way of example only, the laser 14, 114 to be used with the present embodiments can be a 500 W (watt) laser; and the cryogenic substance 36, 136 being used can be provided through the pipette 32, 132 in a flow of 0.6 cc/s of CO₂ or 1.2 cc/s of LIN.

The embodiments of FIG. 1 and FIG. 2, including the related method embodiments, increase process efficiency and speed, reduce defects, and improve product yield due to a reduction in metal oxidation during the manufacturing.

It will be understood that the embodiments described herein are merely exemplary, and that a person skilled in the art may make variations and modifications without departing from the spirit and scope of the invention. All such variations and modifications are intended to be included within the scope of the invention as described herein and provided in the appending claims. It should be understood that the embodiments described above are not only in the alternative, but can be combined.

## Claims

1. An apparatus for manufacturing an object layer by layer, comprising:
a first assembly including a laser for laser-based manufacturing of the object, and a second assembly coacting with the first assembly for cooling at least a portion of said object during said manufacturing, wherein the second assembly comprises:
a tube having a passageway therethrough; and
a liquefied gas for being provided through the passageway to said object during said manufacturing.

2. An apparatus according to claim 1, adapted for additive manufacturing of the object from a powder material.

3. An apparatus according to claim 1, adapted for laser-based ablation manufacturing of a material structure for forming the object.

4. Apparatus according to any of claims 1 to 3, wherein said liquefied gas is a cryogen selected from the group consisting of liquid CO2, liquid nitrogen, and liquid argon.

5. The apparatus of any of claims 1 to 4, wherein the passageway of the tube has an opening with a diameter in a range of from 10 microns to one millimeter through which the liquefied gas is delivered.

6. The apparatus of claim 5, wherein the opening is within 10 mm from a region of the powder material at which the laser impacts.

7. The apparatus of any of claims 1 to 6, wherein the first and second assemblies are constructed as an integral unit.

8. The apparatus of any of claims 1 to 7, wherein the first and second assemblies are movable in conjunction with each other.

9. A method of manufacturing an object, comprising:
applying laser-based manufacturing of the object layer by layer and
cooling said object layer-by-layer during the manufacturing wherein said cooling comprises providing a liquefied gas to the object during the manufacturing.

10. Method of claim 9, **characterized in that** the object is manufactured by additive manufacturing comprising heating an amount of powder material and cooling said powder material layer-by-layer.

11. Method according to claim 9, **characterized in that** the object is manufactured by laser-based ablation manufacturing comprising heating a material structure and removing an amount of material from said material structure, and cooling said material structure where said amount was removed during the ablation manufacturing.

12. The method of any of claims 9 to 11, wherein the liquefied gas is a cryogen selected from the group consisting of liquid CO2, liquid nitrogen, and liquid argon.

13. The method of claim 10, wherein the cooling is provided to said amount of powder material before, concurrent with or after the applying said additive manufacturing.

14. The method of claim 10, wherein the powder material is selected from the group consisting of high alloy steels, stainless steel, titanium and titanium alloys, nickel and nickel alloys, copper and copper alloys, cobalt alloys, binary alloys, and super alloys, plastics, polymers, photopolymer resin; thermoplastic, thermopolymer material such as acrylonitile butadiene styrene (ABS), polylactic acid (PLA), polyvinyl alcohol (PVN), polycarbonate; and carbon fiber.
